(19) Europäisches Patentamt
European Patent Office
Office européen des brevets

(11) **EP 1 376 897 B1**

(12) **EUROPEAN PATENT SPECIFICATION**

(45) Date of publication and mention
of the grant of the patent:
**19.10.2011 Bulletin 2011/42**

(51) Int Cl.:
***H04B 7/185*** *(2006.01)*    ***H04W 36/14*** *(2009.01)*

(21) Application number: **03101593.6**

(22) Date of filing: **02.06.2003**

(54) **Wireless communication system supporting cell handover between terrestrial and non-terrestrial cells**

Drahtloses Kommunikationssystem mit Zellumschaltung zwischen einer irdischen und einer nicht-irdischen Zelle

Système de communication sans fils avec transfert entre une cellule terrestre et une cellule non-terrestre

| | |
|---|---|
| (84) Designated Contracting States:<br>**AT BE BG CH CY CZ DE DK EE ES FI FR GB GR HU IE IT LI LU MC NL PT RO SE SI SK TR** | • **Grossman, Ovadia**<br>**62497, Tel Aviv (IL)** |
| (30) Priority: **26.06.2002 GB 0214695** | (74) Representative: **Treleven, Colin et al**<br>**Optimus Patents Limited**<br>**Grove House**<br>**Lutyens Close**<br>**Basingstoke**<br>**Hampshire, RG24 8AG (GB)** |
| (43) Date of publication of application:<br>**02.01.2004 Bulletin 2004/01** | |
| (73) Proprietor: **Motorola Solutions, Inc.**<br>**Schaumburg IL 60196 (US)** | (56) References cited:<br>**EP-A- 0 602 340     EP-A- 0 840 532**<br>**WO-A-99/40749     GB-A- 2 284 725** |
| (72) Inventors:<br>• **Ben-Ayun, Moshe**<br>**62567, Shoham (IL)**<br>• **Rozental, Mark**<br>**76560, Rehovot (IL)** | **US-A- 5 379 446     US-A- 5 396 253**<br>**US-A1- 2002 013 150     US-B1- 6 408 180** |

**Description**

**Field of the Invention**

This invention relates to wireless communication systems, methods and apparatus. The invention is applicable to, but not limited to, switching between terrestrial and non-terrestrial cellular communication systems to avoid call drops or avoid interference.

**Background of the Invention**

Wireless communications systems, for example cellular telephony or private mobile radio communications systems, typically provide for radio telecommunication links to be arranged between a plurality of base transceiver stations (BTSs) and a plurality of subscriber units, often termed mobile stations (MSs). The term mobile station generally includes both hand-portable and vehicular mounted radio units. In the context of the present invention, a MS is extended to an aircraft mounted radio unit.

Wireless communications systems are distinguished over fixed communications systems, such as the public switched telephone networks (PSTN), principally in that mobile stations move between service providers (and/or different BTS) and in doing so encounter varying radio propagation environments.

In a wireless communication system, each BTS has associated with it a particular geographical coverage area (or cell). The coverage area defines a particular range that the BTS can maintain acceptable communications with MSs operating within its serving cell. Often these cells combine to produce an expanded system coverage area. Communication between a BTS and a MS is performed over wireless communication channels. Some of these channels are used for carrying traffic (information such as speech, data or video information ) whilst other channels (which may be logical or dedicated channels) are used for transferring control information, such as call paging.

One area of wireless communication relates to public and/or private mobile radio (PMR) communications. PMR communications are a standard communication tool of the emergency services, such as the Police, Fire brigade and Ambulance. One current example of a PMR wireless communication system is the TErrestrial Trunked RAdio (TETRA) communication system being standardised by the European Telecommunication Standards Institute (ETSI).

A current focus of the TETRA standardisation process is to define Air-to-Ground-to-Air (AGA) communications, based on a perceived customer (especially Emergency Services) need. It is envisaged that a TETRA MS will need to be able to operate in aircraft such as helicopters. Existing cellular communication systems are inappropriate when the use of the MS is non-terrestrial in nature. In particular, the provision of cellular communication to aircraft is inconsistent with terrestrial cellular communications as the antenna pattern of terrestrial systems is designed to broadcast over a fixed pattern close to the ground. However, an antenna for non-terrestrial use, serving a MS on a fast-moving aircraft, is designed to broadcast over a much larger area, in order to avoid the aircraft repeatedly having to hand-over communications to adjacent cells.

When a TETRA MS is to operate in a helicopter it is intended that it will communicate on dedicated Air-Ground-Air (AGA) frequencies, to dedicated air-cell base transceiver stations (BTSs). The AGA frequencies will not be used for the ground (terrestrial-based) cellular network.

In this manner, it is envisaged that a TETRA combined system will include (i) a network of cells, providing communication with airborne mobile stations, herein called non-terrestrial or air cells, of pre-determined geometry and coverage area, overlaid on (ii) an existing cellular network for terrestrial-based communications, herein called a terrestrial or terrestrial-based cells. It is planned that airborne communication via a dedicated air-cell TETRA BTS must avoid causing severe interference to a terrestrial-based TETRA communication.

In particular, it is also envisaged that the TETRA standard will require that a call should not be dropped whilst, say, a helicopter is landing or taking-off. In this manner, a seamless handover between the terrestrial and AGA (non-terrestrial) networks is required. When the helicopter is on the ground, the TETRA MS in the helicopter must communicate via the terrestrial TETRA network, as the AGA network should not, in general (unless the helicopter has, for example, landed on a mountain), be available.

It is also envisaged that TETRA cells for AGA operation will be much larger then TETRA ground cells. This is because of propagation characteristic differences. Path loss for AGA propagation is known to be proportional to $1/(d^2)$. This is in contrast to known Path loss for terrestrial propagation, which is proportional to $1/(d^{3.5})$; where "d" is distance and $^\wedge$ represents 'to the power of'. In this manner, one air cell coverage area may therefore include, for example, up to approximately one hundred terrestrial TETRA cells in practice.

The inventors of the present invention have recognised a significant problem in the aforementioned Air-to-Ground-to-Air (AGA) communications. When an aircraft such as a helicopter with a TETRA MS is airborne, and operating at a high altitude, it receives high-level signals from very many terrestrial cells. However, when the aircraft performs a relatively fast landing, the received signal strength indication (RSSI) measured at the TETRA MS from transmissions from the non-terrestrial air-cell BTS will drop dramatically. In such a situation, the airborne TETRA MS does not have sufficient time to select (effectively scan and select) the best terrestrial cell from these very many (say one hundred) potential serving terrestrial cells. Hence, any on-going call in which the airborne TETRA MS is participating is likely to be dropped.

Thus, the inventors of the present invention have both recognised the aforementioned problem, and appreciated a need to detect an airborne MS (in say, a helicopter) landing in sufficient time to avoid the dramatic fall- off of RSSI levels. If the fall-off is detected early, an appropriate handover algorithm can be implemented, for example to switch to a nearby terrestrial cell, to avoid an on-going call being dropped.

In a similar vein, the inventors of the present invention have recognised a similar problem in the reverse case, with regard to a TETRA MS in an aircraft such as a helicopter taking off. In this case it is important to determine that the helicopter is taking off so that any on-going call can be handed off to an air-cell BTS in a timely manner. Failure to hand-off to an air-cell BTS in a timely manner will cause severe interference to communication in the ground TETRA network, when the airborne TETRA MS increases its altitude and has a line of sight interference path to a multitude of terrestrial cells.

US-A-6,408,180 describes a mobile station that is able to receive wireless services from non-terrestrial as well as terrestrial systems in a manner that avoids interference. Handover between the systems is based on altitude determined with the assistance of a host aircraft, e.g. by an aircraft altimeter or a status of landing gear.

## Summary of Invention

In accordance with a first aspect of the present invention, there is provided a wireless communication unit, as claimed in Claim 1.

In accordance with a second aspect of the present invention, there is provided a wireless communication system, as claimed in Claim 10.

In accordance with a third aspect of the present invention, there is provided a method as claimed in Claim 11.

Further features of the invention are as defined in the dependent Claims.

In summary, the inventors of the present invention have recognised the need to provide an advanced warning of a handover requirement when handing over from non-terrestrial to terrestrial cells. The problem is particularly pertinent when a subscriber unit is in a helicopter and landing. An airborne-capable MS determines whether a handover is needed based on a change in the measured signal level or levels from serving communication units. During landing, a calculation may be made of a derivative of received signal levels, received from one or more wireless serving non-terrestrial communication unit(s) (BTSs). In this manner, the aircraft's MS is able to determine on its own account whether the aircraft is landing, so that appropriate early handover processes can be commenced between the terrestrial and non-terrestrial cells. The MS may be further operable to initiate and execute a handover process from a cell of the network it is leaving (e.g. the network of air cells) to an appropriate cell of the network it is joining (e.g. the network of terrestrial cells). The method of selection of a cell to handover to may be a method using information about the determined location of the MS.

The system may be a TETRA system.

Thus, the invention beneficially provides a communication system, a communication unit and method of detecting when an airborne-capable MS (in say, a helicopter) is landing or taking off in sufficient time to avoid interference or any on-going call being dropped, thereby alleviating disadvantages associated with the prior art. ,

Exemplary embodiments of the present invention will now be described, with reference to the accompanying drawings, in which:

## Brief Description of the Drawings

FIG. 1 illustrates a graph of path loss (equating to RSSI level of an airborne MS) versus altitude for an airborne MS.

FIG. 2 is a block schematic diagram illustrating a combined terrestrial and non-terrestrial communication system in accordance with a preferred embodiment of the present invention;

FIG. 3 shows a block diagram of a TETRA subscriber unit (MS) adapted to support the inventive concepts of the preferred embodiments of the present invention;

FIG. 4 shows a flowchart of a preferred procedure for implementing the inventive concepts of the present invention; and

FIG. 5 shows a flowchart of the preferred procedure for implementing the inventive concepts of the present invention.

**Description of embodiments of the invention**

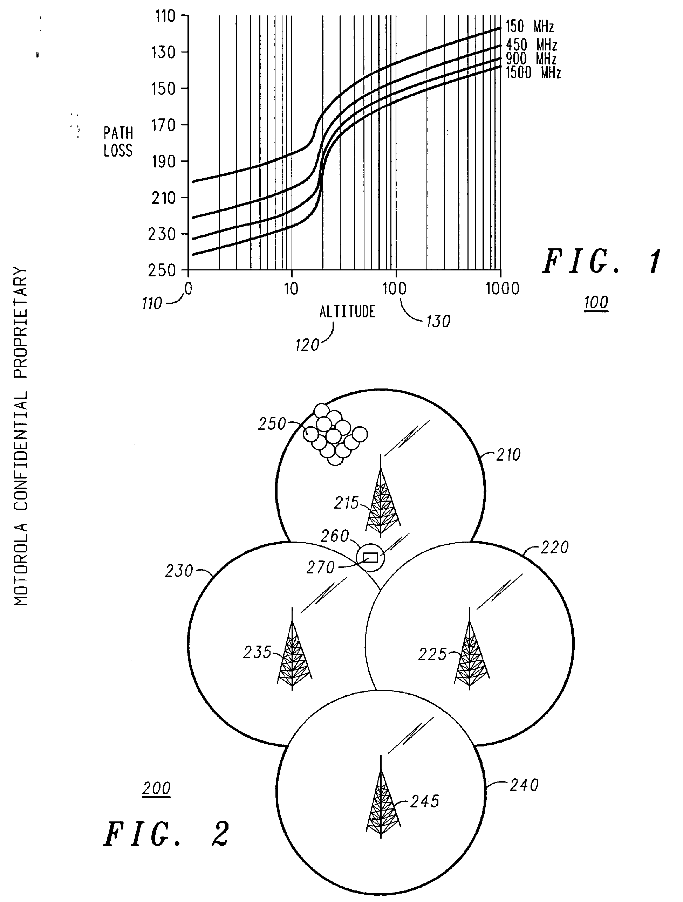

FIG. 1 is a graph 100 of path loss 110 (and thereby an indication of the RSSI level) measured in -dB for receipt of a wireless signal received at a TETRA MS mounted on a helicopter versus altitude 120 measured in metres of the helicopter. As shown, there is a dramatic drop in RSSI levels, particularly when the altitude falls below one hundred metres 130, when a helicopter is landing. In particular, with reference to FIG. 1 it is clear that as the helicopter further reduces altitude from 1 km to 100 metres, the path loss follows $1/(d^2)$ : 20 dB/octave, where the symbol ^ indicates 'to the power of'. However, when the helicopter altitude is reduced to about 20 metres, there is approximately a further 35 to 50 dB decrease in RSSI. This is primarily due to the difference in propagation exponent as described above.

Referring to FIG. 2, a combined terrestrial and non-terrestrial TETRA communication system 200 is illustrated, in accordance with the preferred embodiment of the present invention. The combined system includes four non-terrestrial cells 210, 220, 230, 240, where each non-terrestrial cell covers the same air space as a plurality of smaller terrestrial TETRA cells 250. A limited number of the smaller terrestrial TETRA cells 250 are shown for clarity purposes only.

The non-terrestrial cells 210, 220, 230, 240 are supported by air-cell BTSs 215, 225, 235, and 245 respectively. As shown, an aircraft, carrying a TETRA MS 270 is landing in (or taking off from) a terrestrial TETRA cell 260, which resides within the larger non-terrestrial TETRA cell 210.

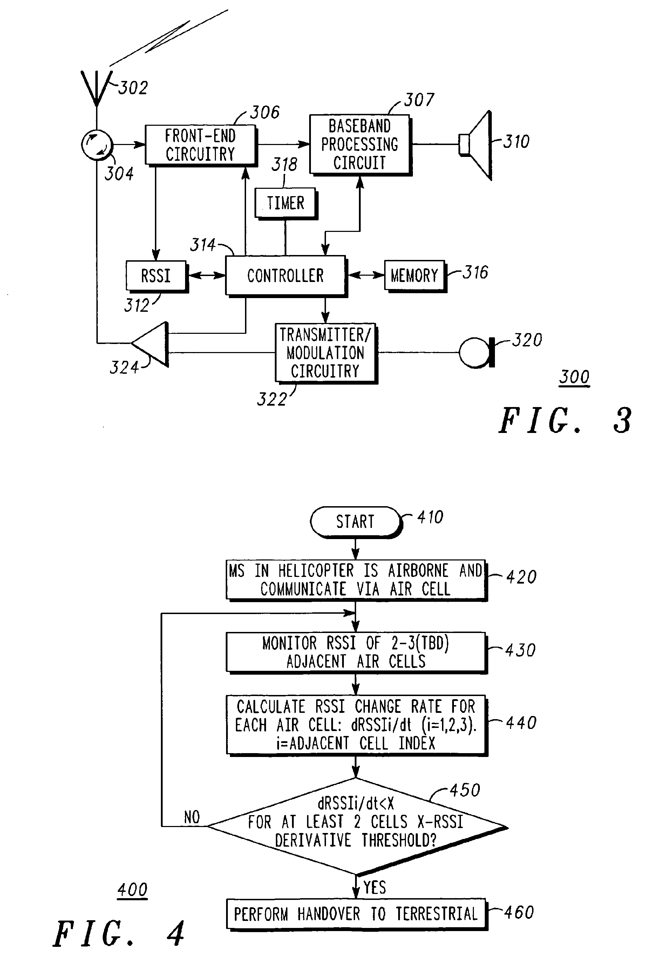

In accordance with an embodiment of the present invention, the TETRA MS 270 needs to detect when it is attempting to land in sufficient time to avoid an on-going call being dropped. The TETRA MS 270, namely a wireless communication unit and described in greater detail with respect to FIG. 3, includes a receiver to receive transmissions from one or more air-cell wireless serving communication units (BTSs). The wireless communication unit further includes a received signal strength indication function and a signalling processing function, operably coupled to the receiver.

In accordance with an embodiment of the present invention, the signal processing function in the TETRA MS 270 continuously calculates a derivative of the RSSI measurement (i.e. dRSSI/dt), based on RSSI measurements from one or more air-cell BTSs. Note that dRSSI/dt is proportional to dRSSI/dh for a given landing speed, where 'h' is the helicopter altitude. Hence, a preferred threshold "X" is set, based on a minimum landing speed. Based on this measured dRSSI/dt, the TETRA MS 270 is able to determine very quickly whether the helicopter (i.e. the TETRA MS 270) is in a landing mode or not.

Clearly, if the aircraft (helicopter) is landing the dRSSI/dt calculation in the TETRA MS 270 will drop dramatically for all air-cell BTSs that it is monitoring, including, for example, its serving air-cell BTS 215 within air-cell 210. In this regard, the RSSI derivative will decrease whilst the MS is landing, particularly at an altitude of approximately 40-50 metres. This decrease in RSSI derivative will indicate to the TETRA MS in the helicopter to start a cell reselection process to a terrestrial cell. Advance knowledge of landing will therefore prevent call drops.

In accordance with an enhanced embodiment of the present invention, the TETRA MS 270 also monitors signals from one or more neighbouring/adjacent air-cell BTSs, such as air-cell BTSs 225, 235, 245, to provide a more reliable landing prediction.

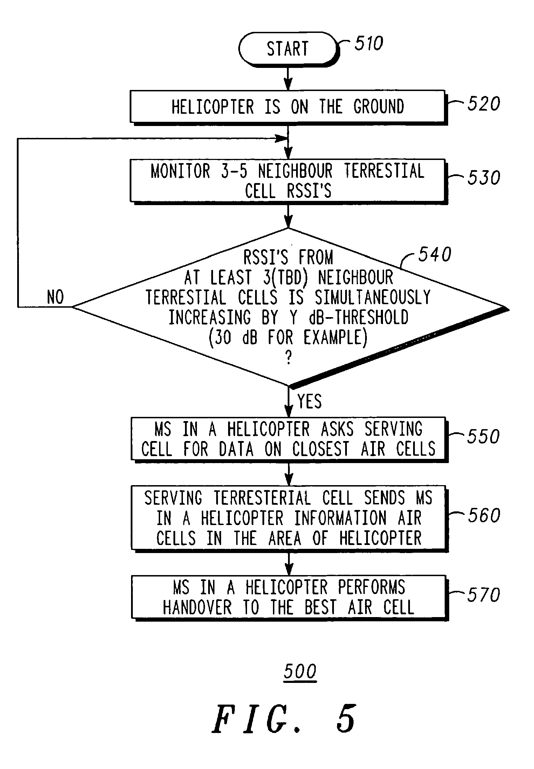

For the scenario when a helicopter is on the ground and in the process of taking off, the preferred embodiment of the present invention proposes that a TETRA MS 270 will purely measure and monitor RSSI levels from a number of adjacent terrestrial cells. If the TETRA MS 270 interprets that the measured RSSI levels of a number of, preferably between three and five, received terrestrial BTSs transmissions, have dramatically increased, the TETRA MS 270 may assume that it is now airborne. It then needs to hand over its communication to a non-terrestrial cell/wireless serving BTS. This approach is further described with respect to FIG. 5.

Hence, and advantageously, the airborne-capable MS is able to perform an earlier handover to a respective terrestrial BTS, when it is landing, to avoid dropping an on-going call. Alternatively, the airborne-capable MS is able to perform an earlier handover to a respective non-terrestrial air-cell BTS (if it is taking off) to avoid causing substantial interference to the terrestrial communication network.

Referring now to FIG. 3, a block diagram of a TETRA MS 300, adapted to support the inventive concepts of the preferred embodiments of the present invention, is shown. The MS 300 contains an antenna 302 preferably coupled to a duplex filter, antenna switch or circulator 304 that provides isolation between receive and transmit chains within the MS 300.

The receiver chain includes scanning receiver front-end circuitry 306 (effectively providing reception, filtering and intermediate or base-band frequency conversion). The scanning front-end circuit 306 is serially coupled to a signal processing function 308. A received signal strength indication (RSSI) function 312 is operably coupled to the scanning front-end circuit 306 and signal processing function 308. The controller 314 or signal processing function 308 may calculate receive bit-error-rate (BER) or frame-error-rate (FER) or similar link-quality measurement data from signals received from one or more air-cell BTS transmissions.

However, in accordance with the preferred embodiment of the present invention, the signal processing function 308 continuously interprets BTS received signal level measurements obtained from the RSSI function 312. In particular, the signal processing function 308 calculates dRSSI/dt for the one or more air-cell BTS transmissions, when determining a landing operation.

In the preferred embodiment of the present invention, the signal processing function 308 is operably coupled to a memory device 316. The memory device, in the present invention, has been adapted to store air-cell BTS dRSSI/dt specific data, including threshold values. In this regard, dependent upon whether the rate of change of RSSI levels exceeds one or more threshold values, the signal processing function 308 is able to determine whether the MS 300 is landing. Alternatively, dependent upon whether a number of RSSI levels from a number of terrestrial BTSs exceeds a threshold value, the signal processing function 308 is able to determine whether the MS 300 is taking off. This determination is preferably made by comparing RSSI levels of a number of, preferably three to five, terrestrial transmissions with one or more different threshold values. As such, the MS 300 is able to instigate handover to a suitable air-cell (non-terrestrial) BTS much more rapidly.

A timer 318 is operably coupled to the controller 314 to control the timing of operations, namely the transmission or reception of time-dependent signals, within the MS 300. In the context of the preferred embodiment of the present invention, timer 318 is used to synchronise the MS's timing to the air-cell BTS transmissions and, if required, determine the timing of prospective handover candidate cells.

For completeness, as known in the art, an output from the signal processing function is typically provided to a suitable output device 310, such as a speaker or visual display unit (VDU). As regards the transmit chain, this essentially includes an input device 320, such as a microphone, coupled in series through transmitter/ modulation circuitry 322 and a power amplifier 324. The transmitter/modulation circuitry 322 and the power amplifier 324 are operationally responsive to the controller, with an output from the power amplifier coupled to the duplex filter or circulator 304, as known in the art.

Of course, the various components within the MS 300 can be realised in discrete or integrated component form, with an ultimate structure therefore being merely an arbitrary selection.

Referring now to FIG. 4, a flowchart 400 illustrates the preferred methodology when an aircraft containing an airborne MS is landing, in accordance with the preferred embodiment of the present invention. The process starts at step 410, with the aircraft (such as a helicopter), being airborne and communicating via the non-terrestrial (air-cell) network, in step 420.

The helicopter's MS receives transmissions from a number of air-cell (non-terrestrial) BTSs, in step 430 and determines the respective RSSI values of the received signals. The MS then calculates a rate of change of RSSI level (dRSSI/dt) for each (or a number of) respective air-cell BTS transmissions, as shown in step 440.

In the preferred embodiment of the present invention, when the (dRSSI/dt) is above a pre-determined threshold (X - negative number) for a number of the cells, say two or three cells, the status of the airborne MS does not change, in step 450. In this mode, the airborne MS continues to monitor and calculate a rate of change of RSSI level (dRSSI/dt) for each (of a number of) respective air-cell BTS transmissions, as shown in steps 430 and 440.

However, when the (dRSSI/dt) is determined as being below a pre-determined threshold (X- negative number) for a number of the cells, i.e. the rate of change is high, the status of the airborne MS changes, in step 450. In this mode, the airborne MS assumes that the aircraft is decreasing its altitude at a sufficiently rapid speed (and/or is sufficiently low) for handover to a terrestrial-based cell to be required. The MS in the aircraft, say a helicopter, then performs cell re-selection to the selected terrestrial cell using any appropriate mechanism, as shown in step 460. One preferred example of a suitable handover process uses determined information on the location of the MS to construct a short list of terrestrial cells to scan to find a suitable cell and to perform rapid handover.

The enhanced embodiment of the present invention, utilising two or more air-cell transmissions, rather than its serving air-cell transmission, provides a more accurate and earlier determination of whether the aircraft is landing. Due to free space propagation the received signal from adjacent air cells is sufficiently high to monitor, for example, signals at -76dBm at 70 km from the adjacent air-cell BTS. The link budget in an air-cell is actually limited by radio horizon, where the radio horizon distance is given by the following formula

$$D_{radio\_horizon}[km] = 1.25\sqrt{(17*h[m])} \qquad [1]$$

Where: h = helicopter height.

Using, as an additional determining factor, the derivative of RSSI from two (or more) adjacent AGA cells the dramatic drop in RSSI level from the adjacent air cell will happen at an altitude of hundreds of metres instead of tens of meters when compared to only using its servicing air-cell BTS transmissions.

In this manner, the airborne MS is able to determine on its own account when a handover operation is desired, based on an imminent expectation that the airborne-based communication service will be lost. Thus, assuming the threshold levels are set accordingly, using for example the graph of FIG. 1, any on-going call will be handed over to a terrestrial cell and will not be dropped.

Referring now to FIG. 5, a flowchart 500 illustrates the preferred methodology when an aircraft containing an airborne MS is taking off, in accordance with the preferred embodiment of the present invention. The process starts at step 510, with the aircraft (such as a helicopter), being land-based and communicating via the terrestrial network, in step 520.

The helicopter's MS receives transmissions from a number of, preferably, between three and five terrestrial BTSs, in step 530 and determines the respective RSSI values of the received signals.

In the preferred embodiment of the present invention, when a number of these RSSI levels are below a pre-determined threshold (Y) for a number of the cells, the status of the land-based TETRA MS does not change, in step 540. In this mode, the land-based TETRA MS continues to monitor the RSSI levels for each respective terrestrial BTS transmissions, as shown in steps 530 and 540.

However, when a number of the RSSI values are determined as substantially simultaneously being measured above a pre-determined threshold (Y) for a number of the terrestrial cells, the status of the land-based MS changes, in step 550. In this mode, the MS assumes that the aircraft is now airborne and increasing its altitude sufficient for handover to an air-cell network to be required. The MS in the aircraft, say a helicopter, may then request appropriate air-cell data from its serving terrestrial cell, as shown in step 550. The terrestrial serving cell then sends the airborne MS the desired information on the air-cell option(s) in the location of the aircraft (terrestrial cell), as in step 560. The airborne MS then performs cell reselection to the selected non-terrestrial air-cell using any appropriate mechanism, as shown in step 570.

In this manner, the land-based MS is able to determine on its own account when a handover operation is desired, based on a recognition that it has become airborne and needs to handover to an AGA network before causing severe interference to a terrestrial network. Thus, assuming the threshold (Y) level(s) are set accordingly, using for example the graph of FIG. 1, any on-going call will be handed over to a non-terrestrial cell seamlessly and without causing severe interference to the terrestrial communication network.

It is noteworthy that the inventors have recognised that known RSSI-based techniques used for handover in terrestrial-based networks are unsuitable in the aforementioned combined AGA-terrestrial communication scenario. If RSSI and not dRSSI/dt were to be used as a criteria, then when the RSSI level is determined as dropping abruptly, it is too late for the airborne MS to handover to a terrestrial cell/BTS. Any on-going call will be dropped, as the MS in a helicopter does not have sufficient advance knowledge of the landing. Furthermore, when taking off, the preferred embodiment of the present invention utilises an alternative form of the RSSI methodology. In this regard, the land-based TETRA MS interprets a need to hand-off to an AGA network when the RSSI signal levels of a number of terrestrial BTSs substantially 'simultaneously' indicate a dramatic increase.

Although the preferred embodiment of the present invention has been described with reference to, a trunked radio communications system such as the TErrestrial Trunked RAdio (TETRA) system, the inventive concepts described herein are applicable to any communication system supporting AGA communications.

It will be understood that the communication system, communication unit and method of cell re-selection and handover, as described above, provides at least the following advantages:

(i) An airborne-capable MS, for example a TETRA MS, is able to determine on its own account when its aircraft is taking off and needs to handover from a terrestrial to a non-terrestrial (AGA) communication systems, thereby avoiding causing severe interference to the terrestrial network.
(ii) An airborne-capable MS, for example a TETRA MS, is able to determine on its own account when it is landing and needs to handover from a non-terrestrial (AGA) to a terrestrial communication systems, thereby avoiding the likelihood of dropping any on-going call.
(iii) By utilising a number of, say three to five, terrestrial cell transmissions, rather than its serving cell transmission, and looking for a simultaneous increase in measured RSSI values for each of the number of terrestrial cell transmissions, the land-based MS is able to make a more accurate and earlier determination of whether the aircraft is taking off.
(iv) By utilising two or more air-cell transmissions, rather than its serving air-cell transmission, the airborne MS is able to make a more accurate and earlier determination of whether the aircraft is landing.

Whilst the specific and preferred implementations of the embodiments of the present invention are described above, it is clear that one skilled in the art could readily apply variations and modifications of such inventive concepts.

Thus a communication system, a communication unit and method of detecting when an airborne-capable MS (in say, a helicopter) is landing or taking off has been described, wherein the abovementioned disadvantages may be alleviated.

**Claims**

1. An airborne-capable wireless communication unit (270) capable of communicating to both terrestrial cells and non-terrestrial cells of a wireless communication system (200), wherein each cell of the wireless communication system (200) incorporates a wireless serving communication unit operable to serve a plurality of subscriber units (270) with a communication resource, the airborne-capable wireless communication unit (270) being operable to:

   (i) receive transmissions from one or more non-terrestrial wireless serving communication unit(s) (215) communicating on a non-terrestrial communication resource;
   (ii) calculate a derivative of the received one or more signal levels from the one or more non-terrestrial wireless serving communication unit(s) (215); and
   (iii) determine whether to handover communication from a non-terrestrial wireless serving communication unit (215) to a terrestrial wireless serving communication unit (260), based on the calculation.

2. An airborne-capable wireless communication unit (270) according to Claim 1, operable to receive transmissions from the one or more non-terrestrial wireless serving communication unit(s) (215), such that it is able to detect whether it is landing.

3. An airborne-capable wireless communication unit (270) according to claim 1 or claim 2, comprising:

   (i) a receiver for receiving transmissions from a plurality of wireless serving non-terrestrial communication units (215); and
   (ii) a received signal strength indication function, operably coupled to the receiver, to determine received signal strengths of the wireless serving non-terrestrial communication unit (215) transmissions;
   (iii) a signalling processing function, operably coupled to the received signal strength indication function, to calculate a rate of change of the received signal levels from the one or more wireless serving non-terrestrial communication units (215), to determine whether to handover communication from a non-terrestrial cell to a terrestrial cell, based on the calculation.

4. An airborne-capable wireless communication unit (270) according to Claim 3, wherein the signal processing function applies one or more threshold values to the rate of change of the received signal levels from the one or more wireless serving non-terrestrial communication units (215), to determine whether or not to handover communication from a non-terrestrial cell to a terrestrial cell, based on the calculation.

5. An airborne-capable wireless communication unit (270) according to any previous claim, operable to:

   (i) receive transmissions from a number of terrestrial wireless serving communication units (260) communicating on a terrestrial communication resource;
   (ii) determine a substantially simultaneous increase in the received one or more signal levels from the terrestrial wireless serving communication units (260); and
   (iii) hand over communication from a terrestrial wireless serving communication unit (260) to a non-terrestrial wireless serving communication unit (215), based on the determination.

6. An airborne-capable wireless communication unit (270) according to claim 5, comprising:

   (i) a receiver for receiving transmissions from a plurality of terrestrial wireless serving communication units;
   (ii) a received signal strength indication function, operably coupled to the receiver, to determine a received signal strength of a plurality of the terrestrial wireless serving communication unit transmissions;
   (iii) a signalling processing function, operably coupled to the received signal strength indication function, to perform a communication handover from a terrestrial cell to a non-terrestrial cell, based on whether there is a substantially simultaneous increase in a number of the plurality of received signal levels.

7. An airborne-capable wireless communication unit (270) according to Claim 6, wherein the signal processing function is operable to apply a threshold to determine whether there is a substantial increase in the received signal levels, to perform a handover.

8. An airborne-capable wireless communication unit (270) according to any of Claims 5-7, operable to receive transmissions from three to five terrestrial wireless serving communication units (260) to detect whether the airborne-capable subscriber unit (270) is taking off, based on a substantial increase in received signal level from the terrestrial wireless serving communication units (260).

9. An airborne-capable wireless communication unit (270) according to any preceding claim, wherein the airborne-capable wireless communication unit complies with the TETRA standard.

10. A wireless communication system (200), comprising:

(i) an airborne-capable wireless communication unit (270) in accordance with any previous claim;
(ii) terrestrial cells (210), each terrestrial cell incorporating a wireless serving communication unit operable to serve a plurality of subscriber units (270) with a terrestrial communication resource; and
(iii) non-terrestrial cells (215), each non-terrestrial cell incorporating a wireless serving communication unit operable to serve a plurality of subscriber units (270) with a non-terrestrial communication resource.

11. A method for determining whether to handover communication from a non-terrestrial cell to a terrestrial cell in a wireless communication system,
wherein the wireless communication system (200) incorporates an airborne-capable wireless communication unit (270) operable to communicate to both terrestrial cells and non-terrestrial cells of the wireless communication system (200),
and wherein each cell of the wireless communication system (200) incorporates a wireless serving communication unit, serving a plurality of wireless subscriber units (270) with a communication resource,
the method comprising the steps, at the airborne-capable wireless subscriber unit (270), of:

(i) receiving transmissions from one or more non-terrestrial wireless serving communication unit(s) (215) communicating on a non-terrestrial communication resource;
(ii) calculating a derivative of the received one or more signal levels, from the one or more non-terrestrial wireless serving communication unit(s) (215); and
(iii) determining whether or not to handover communication from a non-terrestrial wireless serving communication unit (215) to a terrestrial wireless serving communication unit (260), based on the calculation.

12. The method of claim 11, wherein the airborne-capable wireless communication unit (270) detects, from the derivative of the received one or more signal levels, whether it is landing.

13. A method in accordance with claim 11 or claim 12, further comprising the airborne-capable wireless communication unit:

(i) receiving transmissions from a plurality of wireless serving non-terrestrial communication units (215);
(ii) determining received signal strengths of the wireless serving non-terrestrial communication unit (215) transmissions;
(iii) calculating a rate of change of the plurality of the received signal strengths, to determine whether to handover communication from a non-terrestrial cell to a terrestrial cell, based on the calculation.

14. A method in accordance with claim 13, wherein the signal processing function applies one or more threshold values to the rate of change of the received signal levels, to determine whether or not to handover communication from a non-terrestrial cell to a terrestrial cell, based on the calculation.

15. A method according to any of claims 11-14, further comprising the airborne-capable wireless communication unit:

(i) receiving transmissions from a plurality of terrestrial wireless serving communication units (260), communicating on a terrestrial communication resource;
(ii) determining a substantially simultaneous increase in the received signal strength levels from the plurality of terrestrial wireless serving communication units (260); and
(iii) handing communication from a terrestrial wireless serving communication unit (260) to a non-terrestrial wireless serving communication unit (215), based on the determination.

**EP 1 376 897 B1**

**Patentansprüche**

1.  **Zur Beförderung durch die Luft geeignete** drahtlose Kommunikationseinheit (270), dazu geeignet, mit irdischen Zellen und nicht-irdischen Zellen eines drahtlosen Kommunikationssystems (200) zu kommunizieren, wobei jede Zelle des drahtlosen Kommunikationssystems (200) eine drahtlos bedienende Kommunikationseinheit enthält, **die betriebsfähig ist, eine Mehrzahl von** Teilnehmereinheiten (270) mit einer Kommunikationsressource zu bedienen, wobei die zur Beförderung durch die Luft geeignete drahtlose Kommunikationseinheit (270) betriebfähig ist zum:

    (i) Empfangen von Übertragungen von einer oder mehreren nicht-irdischen drahtlos bedienenden Kommunikationseinheit(en) (215), die auf einer nicht-irdischen Kommunikationsressource kommuniziert/kommunizieren;
    (ii) Berechnen einer Ableitung der empfangenen einen oder mehreren Signalpegel von **der einen oder** den mehreren nicht-irdischen drahtlos bedienenden Kommunikationseinheit(en) (215); und
    (iii) Bestimmen, basierend auf der Berechnung, ob die Kommunikation von einer nicht-irdischen drahtlos bedienenden Kommunikationseinheit (215) an eine irdische drahtlos bedienende Kommunikationseinheit (260) übergeben werden kann.

2.  **Zur Beförderung durch die Luft geeignete** drahtlose Kommunikationseinheit (270) nach Anspruch 1, die betriebsfähig ist, Übertragungen von der einen oder den mehreren nicht-irdischen drahtlos bedienenden Kommunikationseinheit(en) (215) zu empfangen, so dass sie in der Lage ist, zu ermitteln, ob sie landet.

3.  **Zur Beförderung durch die Luft geeignete** drahtlose Kommunikationseinheit (270) nach Anspruch 1 oder Anspruch 2, umfassend:

    (i) einen Empfänger zum Empfangen von Übertragungen von einer Mehrzahl von drahtlos bedienenden nicht-irdischen Kommunikationseinheiten (215); und
    (ii) eine Empfangssignalstärkeanzeigefunktion, betriebsfähig mit dem Empfänger gekoppelt, zum Bestimmen von Empfangssignalstärken der Übertragungen der drahtlos bedienenden nicht-irdischen Kommunikationseinheiten (215);
    (iii) eine Signalisierungsverarbeitungsfunktion, betriebsfähig mit der Empfangssignalstärkeanzeigefunktion gekoppelt, zum Berechnen einer Änderungsrate der Empfangssignalpegel von der einen oder den mehreren drahtlos bedienenden nicht-irdischen Kommunikationseinheiten (215), um basierend auf der Berechnung zu bestimmen, ob die Kommunikation von einer nicht-irdischen Zelle an eine irdische Zelle übergeben werden kann.

4.  **Zur Beförderung durch die Luft geeignete** drahtlose Kommunikationseinheit (270) nach Anspruch 3, wobei die Signalverarbeitungsfunktion einen oder mehrere Schwellenwerte auf die Änderungsrate der Empfangssignalpegel von der einen oder den mehreren drahtlos bedienenden nicht-irdischen Kommunikationseinheiten (215) anwendet, um basierend auf der Berechnung zu bestimmen, ob oder ob nicht die Kommunikation von einer nicht-irdischen Zelle an eine irdische Zelle übergeben werden kann.

5.  Zur Beförderung durch die Luft geeignete drahtlose Kommunikationseinheit (270) nach einem der vorhergehenden Ansprüche, betriebsfähig zum:

    (i) Empfangen von Übertragungen von einer Anzahl von irdischen drahtlos bedienenden Kommunikationseinheiten (260), die auf einer irdischen Kommunikationsressource kommunizieren;
    (ii) Bestimmen eines im Wesentlichen gleichzeitigen Anstiegs in den empfangenen einen oder mehreren Signalpegeln von den irdischen drahtlos bedienenden Kommunikationseinheiten (260); und
    (iii) Übergeben der Kommunikation von einer irdischen drahtlos bedienenden Kommunikationseinheit (260) an eine nicht-irdische drahtlos bedienende Kommunikationseinheit (215), basierend auf der Bestimmung.

6.  **Zur Beförderung durch die Luft geeignete** drahtlose Kommunikationseinheit (270) nach Anspruch 5, umfassend:

    (i) einen Empfänger zum Empfangen von Übertragungen von einer Mehrzahl von irdischen drahtlos bedienenden Kommunikationseinheiten;
    (ii) eine Empfangssignalstärkeanzeigefunktion, betriebsfähig gekoppelt mit dem Empfänger, zum Bestimmen einer Empfangssignalstärke von einer Mehrzahl der Übertragungen der irdischen drahtlos bedienenden Kommunikationseinheiten;
    (iii) eine Signalisierungsverarbeitungsfunktion, betriebsfähig gekoppelt mit der Empfangssignalstärkeanzeigefunktion, **zum Durchführen** einer Kommunikationsübergabe von einer irdischen Zelle an eine nicht-irdische

9

Zelle basierend darauf, ob es einen im Wesentlichen gleichzeitigen Anstieg in einer Anzahl der Mehrzahl von Empfangssignalpegeln gibt.

7. **Zur Beförderung durch die Luft geeignete** drahtlose Kommunikationseinheit (270) nach Anspruch 6, wobei die Signalverarbeitungsfunktion betriebsfähig ist, einen Schwellenwert anzuwenden, um zu bestimmen, ob es einen wesentlichen Anstieg in den Empfangssignalpegeln gibt, um eine Übergabe durchzuführen.

8. **Zur Beförderung durch die Luft geeignete** drahtlose Kommunikationseinheit (270) nach einem der Ansprüche 5-7, die betriebsfähig ist zum Empfangen von Übertragungen von drei bis fünf irdischen drahtlos bedienenden Kommunikationseinheiten (260), um basierend auf einem wesentlichen Anstieg im Empfangssignalpegel von den irdischen drahtlos bedienenden Kommunikationseinheiten (260) zu ermitteln, ob die zur Beförderung durch die Luft geeignete Teilnehmereinheit (270) abhebt.

9. **Zur Beförderung durch die Luft geeignete** drahtlose Kommunikationseinheit (270) nach einem den vorhergehenden Ansprüche, wobei die zur Beförderung durch die Luft geeignete drahtlose Kommunikationseinheit dem TETRA-Standard genügt.

10. Drahtloses Kommunikationssystem (200), umfassend:

   (i) eine zur Beförderung durch die Luft geeignete drahtlose Kommunikationseinheit (270) gemäß einem der vorhergehenden Ansprüche;
   (ii) irdische Zellen (210), wobei jede irdische Zelle eine drahtlos bedienende Kommunikationseinheit enthält, die betriebsfähig ist, eine Mehrzahl von Teilnehmereinheiten (270) mit einer irdischen Kommunikationsressource zu bedienen; und
   (iii) nicht-irdische Zellen (215), wobei jede nicht-irdische Zelle eine drahtlos bedienende Kommunikationseinheit enthält, die betriebsfähig ist, eine Mehrzahl von Teilnehmereinheiten (270) mit einer nicht-irdischen Kommunikationsressource zu bedienen.

11. Verfahren zum Bestimmen, ob die Kommunikation von einer nicht-irdischen Zelle an eine irdische Zelle in einem drahtlosen Kommunikationssystem übergeben werden kann,
   wobei das drahtlose Kommunikationssystem (200) eine zur Beförderung durch die Luft geeignete drahtlose Kommunikationseinheit (270) enthält, die betriebsfähig ist, mit irdis **chen Zellen und nicht**-irdischen Zellen des drahtlosen Kommunikationssystems (200) zu kommunizieren,
   und wobei jede Zelle des drahtlosen Kommunikationssystems (200) eine drahtlos bedienende Kommunikationseinheit enthält, die eine Mehrzahl von drahtlosen Teilnehmereinheiten (270) mit einer Kommunikationsressource bedient,
   wobei das Verfahren bei der zur Beförderung durch die Luft geeigneten drahtlosen Teilnehmereinheit (270) die folgenden Schritte umfasst:

   (i) Empfangen von Übertragungen von einer oder mehreren nicht-irdischen drahtlos bedienenden Kommunikationseinheit(en) (215), die auf einer nicht-irdischen Kommunikationsressource kommuniziert/kommunizieren;
   (ii) Berechnen einer Ableitung der empfangenen einen oder mehreren Signalpegel von **der einen oder den mehreren nicht**-irdischen drahtlos bedienenden Kommunikationseinheit(en) (215); und
   (iii) Bestimmen, basierend auf der Berechnung, ob oder ob nicht die Kommunikation von einer nicht-irdischen drahtlos bedienenden Kommunikationseinheit (215) an eine irdische drahtlos bedienende Kommunikationseinheit (260) übergeben werden kann.

12. Verfahren nach Anspruch 11, wobei die zur Beförderung durch die Luft geeignete drahtlose Kommunikationseinheit (270) aus der Ableitung der empfangenen einen oder den mehreren Signalpegel ermittelt, ob sie landet.

13. Verfahren nach Anspruch 11 oder Anspruch 12, außerdem umfassend, dass die zur Beförderung durch die Luft geeignete drahtlose Kommunikationseinheit

   (i) Übertragungen von einer Mehrzahl von drahtlos bedienenden nicht-irdischen Kommunikationseinheiten (215) empfängt;
   (ii) Empfangssignalstärken der Übertragungen der drahtlos bedienenden nicht-irdischen Kommunikationseinheiten (215) bestimmt;
   (iii) eine Änderungsrate der Mehrzahl der Empfangssignalstärken berechnet, um basierend auf der Berechnung zu bestimmen, ob die Kommunikation von einer nicht-irdischen Zelle an eine irdische Zelle übergeben werden kann.

**14.** Verfahren nach Anspruch 13, wobei die Signalverarbeitungsfunktion einen oder mehrere Schwellenwerte auf die Änderungsrate der Empfangssignalpegel anwendet, um basierend auf der Berechnung zu bestimmen, ob oder ob nicht die Kommunikation von einer nicht-irdischen Zelle an eine irdische Zelle übergeben werden kann.

**15.** Verfahren nach einem der Ansprüche 11-14, außerdem umfassend, dass die zur Beförderung durch die Luft geeignete drahtlose Kommunikationseinheit

(i) Übertragungen von einer Mehrzahl von irdischen drahtlos bedienenden Kommunikationseinheiten (260) empfängt, die auf einer irdischen Kommunikationsressource kommunizieren;
(ii) einen im Wesentlichen gleichzeitigen Anstieg in den Empfangssignalstärkepegeln von der Mehrzahl von irdischen drahtlos bedienenden Kommunikationseinheiten (260) bestimmt; und
(iii) die Kommunikation von einer irdischen drahtlos bedienenden Kommunikationseinheit (260) an eine nicht-irdische drahtlos bedienende Kommunikationseinheit (215) basierend auf der Bestimmung übergibt.

## Revendications

**1.** Unité de communication sans fil pouvant être aéroportée (270) capable de communiquer à la fois avec des cellules terrestres et des cellules non terrestres d'un système de communication sans fil (200), où chaque cellule du système de communication sans fil (200) incorpore une unité de communication de desserte sans fil exploitable pour desservir une pluralité d'unités d'abonné (270) avec une ressource de communication, l'unité de communication sans fil pouvant être aéroportée (270) étant exploitable pour :

(i) recevoir des transmissions en provenance d'une ou plusieurs unités(s) de communication de desserte sans fil non terrestre(s) (215) communiquant sur une ressource de communication non terrestre ;
(ii) calculer une dérivée des un ou plusieurs niveaux de signal reçu en provenance des une ou plusieurs unités (s) de communication de desserte sans fil non terrestre(s) (215) ; et
(iii) déterminer si, oui ou non, il convient de transférer une communication d'une unité de communication de desserte sans fil non terrestre (215) à une unité de communication de desserte sans fil terrestre (260), sur la base du calcul.

**2.** Unité de communication sans fil pouvant être aéroportée (270) selon la revendication 1, exploitable pour recevoir des transmissions en provenance des une ou plusieurs unités(s) de communication de desserte sans fil non terrestre (s) (215), de façon à être en mesure de détecter si elle atterrit.

**3.** Unité de communication sans fil pouvant être aéroportée (270) selon la revendication 1 ou la revendication 2, comprenant :

(i) un récepteur pour recevoir des transmissions en provenance d'une pluralité d'unités de communication non terrestres de desserte sans fil (215) ; et
(ii) une fonction d'indication d'intensité du signal reçu, couplée de manière opérationnelle au récepteur, pour déterminer des intensités de signal reçu des transmissions de l'unité de communication non terrestre de desserte sans fil (215) ;
(iii) une fonction de traitement de signalisation, couplée de manière opérationnelle à la fonction d'indication d'intensité du signal reçu, pour calculer un taux de changement des niveaux de signal reçu en provenance des une ou plusieurs unités de communication non terrestres de desserte sans fil (215), afin de déterminer si, oui ou non, il convient de transférer une communication d'une cellule non terrestre à une cellule terrestre, sur la base du calcul.

**4.** Unité de communication sans fil pouvant être aéroportée (270) selon la revendication 3, dans laquelle la fonction de traitement de signal applique une ou plusieurs valeurs de seuil au taux de changement des niveaux de signal reçu en provenance des une ou plusieurs unités de communication non terrestres de desserte sans fil (215), afin de déterminer si, oui ou non, il convient de transférer une communication d'une cellule non terrestre à une cellule terrestre, sur la base du calcul.

**5.** Unité de communication sans fil pouvant être aéroportée (270) selon l'une quelconque des revendications précédentes, exploitable pour :

(i) recevoir des transmissions en provenance d'un nombre d'unités de communication de desserte sans fil terrestres (260) communiquant sur une ressource de communication terrestre ;
(ii) déterminer une augmentation sensiblement simultanée des un ou plusieurs niveaux de signal reçu en provenance des unités de communication de desserte sans fil terrestres (260) ; et
(iii) transférer une communication d'une unité de communication de desserte sans fil terrestre (260) à une unité de communication de desserte sans fil non terrestre (215), sur la base de la détermination.

**6.** Unité de communication sans fil pouvant être aéroportée (270) selon la revendication 5, comprenant :

(i) un récepteur pour recevoir des transmissions en provenance d'une pluralité d'unités de communication de desserte sans fil terrestres ;
(ii) une fonction d'indication d'intensité du signal reçu, couplée de manière opérationnelle au récepteur, pour déterminer une intensité du signal reçu d'une pluralité des transmissions d'unité de communication de desserte sans fil terrestre ;
(iii) une fonction de traitement de signalisation, couplée de manière opérationnelle à la fonction d'indication d'intensité du signal reçu, pour effectuer un transfert de communication d'une cellule terrestre à une cellule non terrestre, sur la base de s'il y a, oui ou non, une augmentation sensiblement simultanée d'un nombre de la pluralité de niveaux de signal reçu.

**7.** Unité de communication sans fil pouvant être aéroportée (270) selon la revendication 6, dans laquelle la fonction de traitement de signal est exploitable pour appliquer un seuil afin de déterminer s'il y a une augmentation sensible des niveaux de signal reçu, pour effectuer un transfert.

**8.** Unité de communication sans fil pouvant être aéroportée (270) selon l'une quelconque des revendications 5 à 7, exploitable pour recevoir des transmissions en provenance de trois à cinq unités de communication de desserte sans fil terrestres (260) afin de détecter si l'unité d'abonné pouvant être aéroportée (270) décolle, sur la base d'une augmentation sensible de niveau de signal reçu en provenance des unités de communication de desserte sans fil terrestres (260).

**9.** Unité de communication sans fil pouvant être aéroportée (270) selon l'une quelconque des revendications précédentes, dans laquelle l'unité de communication sans fil pouvant être aéroportée est conforme à la norme TETRA.

**10.** Système de communication sans fil (200), comprenant :

(i) une unité de communication sans fil pouvant être aéroportée (270) conformément à l'une quelconque des revendications précédentes ;
(ii) des cellules terrestres (210), chaque cellule terrestre incorporant une unité de communication de desserte sans fil exploitable pour desservir une pluralité d'unités d'abonné (270) avec une ressource de communication terrestre ; et
(iii) des cellules non terrestres (215), chaque cellule non terrestre incorporant une unité de communication de desserte sans fil exploitable pour desservir une pluralité d'unités d'abonné (270) avec une ressource de communication non terrestre.

**11.** Procédé pour déterminer si, oui ou non, il convient de transférer une communication d'une cellule non terrestre à une cellule terrestre dans un système de communication sans fil,
dans lequel le système de communication sans fil (200) incorpore une unité de communication sans fil pouvant être aéroportée (270) exploitable pour communiquer à la fois avec des cellules terrestres et des cellules non terrestres du système de communication sans fil (200),
et dans lequel chaque cellule du système de communication sans fil (200) incorpore une unité de communication de desserte sans fil, desservant une pluralité d'unités d'abonné sans fil (270) avec une ressource de communication, le procédé comprenant les étapes, au niveau de l'unité de d'abonné sans fil pouvant être aéroportée (270), consistant à :

(i) recevoir des transmissions en provenance d'une ou plusieurs unités(s) de communication de desserte sans fil non terrestre(s) (215) communiquant sur une ressource de communication non terrestre ;

(ii) calculer une dérivée des un ou plusieurs niveaux de signal reçu en provenance des une ou plusieurs unités (s) de communication de desserte sans fil non terrestre(s) (215) ; et

(iii) déterminer si, oui ou non, il convient de transférer une communication d'une unité de communication de desserte sans fil non terrestre (215) à une unité de communication de desserte sans fil terrestre (260), sur la base du calcul.

**12.** Procédé selon la revendication 11, dans lequel l'unité de communication sans fil pouvant être aéroportée (270) détecte, à partir de la dérivée des un ou plusieurs niveaux de signal reçu, si elle atterrit.

**13.** Procédé selon la revendication 11 ou la revendication 12, comprenant en outre l'unité de communication sans fil pouvant être aéroportée :

(i) recevant des transmissions en provenance d'une pluralité d'unités de communication non terrestres de desserte sans fil (215) ;

(ii) déterminant des intensités de signal reçu des transmissions de l'unité de communication non terrestre de desserte sans fil (215) ;

(iii) calculant un taux de changement de la pluralité des intensités de signal reçu, afin de déterminer si, oui ou non, il convient de transférer une communication d'une cellule non terrestre à une cellule terrestre, sur la base du calcul.

**14.** Procédé selon la revendication 13, dans lequel la fonction de traitement de signal applique une ou plusieurs valeurs de seuil au taux de changement des niveaux de signal reçu, afin de déterminer si, oui ou non, il convient de transférer une communication d'une cellule non terrestre à une cellule terrestre, sur la base du calcul.

**15.** Procédé selon l'une quelconque des revendications 11 à 14, comprenant en outre l'unité de communication sans fil pouvant être aéroportée :

(i) recevant des transmissions en provenance d'une pluralité d'unités de communication de desserte sans fil terrestres (260), communiquant sur une ressource de communication terrestre ;

(ii) déterminant une augmentation sensiblement simultanée des un ou plusieurs niveaux de signal reçu en provenance de la pluralité d'unités de communication de desserte sans fil terrestres (260) ; et

(iii) transférant une communication d'une unité de communication de desserte sans fil terrestre (260) à une unité de communication de desserte sans fil non terrestre (215), sur la base de la détermination.

FIG. 1

FIG. 2

FRONT-END CIRCUITRY *306*

BASEBAND PROCESSING CIRCUIT *307*

*310*

*318*

TIMER

*314*

RSSI

*312*

CONTROLLER

MEMORY *316*

*324*

TRANSMITTER/ MODULATION CIRCUITRY

*320*

*322*

*302*

*304*

*300*

# FIG. 3

START *410*

MS IN HELICOPTER IS AIRBORNE AND COMMUNICATE VIA AIR CELL *420*

MONITOR RSSI OF 2-3(TBD) ADJACENT AIR CELLS *430*

CALCULATE RSSI CHANGE RATE FOR EACH AIR CELL: dRSSIi/dt (i=1,2,3). i=ADJACENT CELL INDEX *440*

dRSSIi/dt<X FOR AT LEAST 2 CELLS X-RSSI DERIVATIVE THRESHOLD? *450*

NO

YES

PERFORM HANDOVER TO TERRESTRIAL *460*

*400*

# FIG. 4

START ~510

HELICOPTER IS ON THE GROUND ~520

MONITOR 3-5 NEIGHBOUR TERRESTIAL CELL RSSI'S ~530

RSSI'S FROM AT LEAST 3(TBD) NEIGHBOUR TERRESTIAL CELLS IS SIMULTANEOUSLY INCREASING BY Y dB-THRESHOLD (30 dB FOR EXAMPLE) ? ~540

NO

YES

MS IN A HELICOPTER ASKS SERVING CELL FOR DATA ON CLOSEST AIR CELLS ~550

SERVING TERRESTERIAL CELL SENDS MS IN A HELICOPTER INFORMATION AIR CELLS IN THE AREA OF HELICOPTER ~560

MS IN A HELICOPTER PERFORMS HANDOVER TO THE BEST AIR CELL ~570

500

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6408180 A